# EUROPEAN PATENT SPECIFICATION

(11) **EP 3 768 042 B1**
(45) Date of publication and mention of the grant of the patent: **07.12.2022**
(21) Application number: 19187195.3
(22) Date of filing: 19.07.2019
(51) Int. Cl.: H05B 6/06

(54) **METHOD FOR CONTROLLING THE PROVISION OF ELECTRIC POWER TO AN INDUCTION COIL**
VERFAHREN ZUR STEUERUNG DER BEREITSTELLUNG VON ELEKTRISCHEM STROM AN EINE INDUKTIONSSPULE
PROCÉDÉ DE COMMANDE DE L'ALIMENTATION EN ÉNERGIE ÉLECTRIQUE À UNE BOBINE D'INDUCTION

(43) Date of publication of application: 20.01.2021
(73) Proprietor: ELECTROLUX APPLIANCES AKTIEBOLAG, 105 45 Stockholm (SE)
(72) Inventor: ZANGOLI, Massimo, 47122 Forli (IT); NOSTRO, Massimo, 47122 Forli (IT); VIROLI, Alex, 47122 Forli (IT); XU, Chunlong, Shanghai, Zhejiang 310018 (CN)
(74) Representative: Electrolux Group Patents

(56) References cited:
- CN-B- 106 160 534
- JP-A- S6 313 294
- US-A1- 2008 203 087

## Description

The present invention relates generally to the field of cooking appliances. More specifically, the present invention relates to a method for controlling the provision of electric power to an induction coil of an induction hob and a corresponding system.

### BACKGROUND OF THE INVENTION

Induction cooking appliances comprising switched heating power transferring elements are known in prior art.

In order to control the provision of heating power to a cookware item, the power level can be varied. Induction generators, specifically induction generators with quasi-resonant architecture often suffer from a limited capability of power variation.

Disadvantageously, at low power level, switching losses occurring at the switching element increase because voltage applied to the switching element at the point of time of switching increases. Said increase of voltage leads to hard switching conditions which rise power dissipation due to thermal losses. In addition, said increase of voltage leads to acoustic noise when performing switching operation. Said problem increases when reducing minimum power level. Therefore, the range in which power level can be chosen is limited downwardly due to thermal losses of the switching element.

US 2008203087 relates to a method for operating an induction heating device. The induction heating device in US 2008203087 comprises an induction coil and a frequency converter for producing a control voltage for the induction coil.

JPS 6313294A relates to an induction heating cooker.

CN 106160534B relates to a cooking utensil, cooking utensil electromagnetic heating device and heating control.

### SUMMARY OF THE INVENTION

It is an objective of the embodiments of the invention to provide an induction cooking appliance which enables a broad power control range with reduced power dissipation and/or reduced acoustic noise. The objective is solved by the features of the independent claims. Preferred embodiments are given in the dependent claims. If not explicitly indicated otherwise, embodiments of the invention can be freely combined with each other.

It is known in the art that such household cooking hobs or cooking appliances usually are provided for conducting at least one cooking process comprising heating and/or cooling step, respectively. Such cooking process preferably at least comprises a heating step, e.g. frying, boiling, simmering or pouching of a foodstuff or a cooking liquid, respectively. For supporting the foodstuff or cookware item, it is particularly known to provide a cooking support, for example in the form of a cooking surface. Such cooking surface usually provides a support for the cookware items, for example, provided in the form of a plate element, particularly a glass or glass ceramic plate.

Preferably, the cooking hob comprises, preferably consists of, a cooking support and a lower casing. Thereby it is preferred that an open top side of the lower casing is covered by at least a part of the cooking support. The cooking support may be provided particularly as at least one panel, wherein preferably the panel is a glass ceramic panel. Preferably, at least one or more heating power transferring elements are arranged beneath the panel.

The lower casing may be manufactured from different material comprising plastics or metal, e.g. aluminum.

In particular, such casing may include a bottom wall and at least one sidewall. It is preferred that said casing is made of metal, e.g. aluminium or steel, and/or plastics, wherein preferably the casing made of metal is grounded.

Advantageously said lower casing may comprise at least one heating power energy unit, particularly arranged in a respective heating power energy unit housing, the heating power transferring elements, heating power transferring element carrier or heating power transferring element support. In other words, the lower casing and the cooking support may form a closed unit comprising all essential parts of the cooking hob. Thereby the lower casing may comprise fastening means for fastening and/or arranging the cooking hob on top of or in a cutout of a work plate.

Thereby, preferably, a power transferring element may be arranged below a cooking support. Preferably, the one or more heating power transferring elements are arranged in an upper portion of the lower casing of the cooking hob. A power transferring element may be arranged and supported by one or more heating power transferring element carrier or heating power transferring element support, preferably the power transferring element attached and/or arranged on said carrier or support. A housing comprising an energy power unit may be arranged below one or more heating power transferring element carrier or heating power transferring element supports. Thereby, preferably a heating power transferring element carrier or heating power transferring element support with the supported heating power-transferring element may advantageously be arranged on top of and/or attached to such housing of an energy power unit.

For conducting the cooking process, particularly a heating step, a cooking appliance, particularly the lower casing, comprises at least one heating power-transferring element. Said heating power-transferring element is provided for transferring heating power to the foodstuff or cooking liquid, preferably contained in a cookware item.

Preferably, the at least one heating power transferring element is an electric heating element, in particular an induction heating element, particularly induction coil, and/or radiant heating element. The heating power provided by a heating power-transferring element may be preferably provided electrically. Preferably, the heating power may be provided by a heat-generating magnetic field, more particularly an induction field. Accordingly, the cooking hob of the present invention preferably is an induction hob.

Preferably, a heating power-transferring element in the form of an induction coil comprises a planar conductive winding wire, particularly a copper wire. Preferably, an induction coil comprises at least one magnetic field supporting element, e.g. a ferrite element. Preferably, said at least one magnetic field supporting element, particularly at least one ferrite element, is arranged below the plane of the conductive winding wire. Said at least one magnetic field supporting element, particularly ferrite element, is advantageous in establishing and/or supporting the high frequent alternating magnetic field of the induction coil. Said magnetic field supporting element, particularly if arranged below the conductive winding wire, may be glued to or supported by ferrite support elements, e.g. snap fit connectors or the like.

Preferably, an induction coil comprises a shielding element, e.g. a mica sheet. The shielding element preferably is adapted to the form of the planar conductive winding wire or the form of at least two planar conductive winding wires of at least two adjacently arranged coils. The shielding element preferably is provided above the at least one magnetic field supporting element, particularly at least one ferrite element. The shielding element preferably in its main function is a support for the planar conductive wire windings of the coil. However, additionally the shielding element, particularly mica sheet, may also shield temperature radiated from the above, e.g. resulting from a heated up pot bottom.

In the cooking hob of the present invention the at least one heating power transferring element is preferably arranged and/or mounted on a heating power transferring element carrier or heating power transferring element support, particularly comprised in the lower casing. It is particularly preferred that a carrier made of aluminum sheet metal supports the heating power-transferring element. Particularly, the cooking hob of the present invention may comprise power transferring element carrier or heating power transferring element support to support one heating power transferring element, however, it is also considered herein that one power transferring element carrier or heating power transferring element support is provided to support more than one heating power transferring element.

In a preferred embodiment of the present invention, two heating power transferring elements are arranged on and supported by one common heating power transferring element carrier. Particularly at least two induction coils are arranged on and supported by one common induction coil carrier plate.

The heating power transferring element carrier or heating power transferring element support may be advantageously supported by or on a housing of the heating energy power unit.

Particularly, at least one of, preferably all of, the heating power transferring elements of an cooking hob of the invention, more particularly an induction coil of an induction hob, may be arranged below a cooking support, particularly a cooking surface in form of a plate element, and particularly within the lower casing, in order to provide the heat for a heating step to a heating zone of the cooking support and to the bottom side of a cookware item and foodstuff, respectively, when placed on said heating zone.

A cooking support of a cooking hob of the invention, particularly of an induction hob of the invention, preferably comprises at least one heating zone. Such heating zone as referred to herein, preferably refers to a portion of the cooking support, particularly cooking surface, which is associated with one heating power transferring element, e.g. a radiant heating element or an induction coil, which is arranged at, preferably below, the cooking support, e.g. the glass ceramic plate. Particularly, in an embodiment according to which the cooking hob of the present invention is an induction hob, it is preferred that such heating zone refers to a portion of the cooking support, which is associated with at least one induction coil. Thereby, the heating power transferring elements associated with a heating zone are preferably configured such that the same heating power of the associated heating power transferring elements is transferred to the heating zone. Preferably, the heating zone thus refers to a portion of the cooking support to which the same heating power of the associated at least one heating power transferring element is transferred.

In addition, the cooking hob of the present invention, may particularly be configured such that in one operation mode one or more than one heating zones form one cooking zone and/or are combined to one cooking zone, respectively. A cooking zone may be particularly provided as at least a portion of the cooking surface. Particularly, such cooking zone is associated with at least one heating zone. Additionally, or alternatively, a cooking zone may be associated with more than one heating zone. Particularly, a cooking zone may be associated with an even number, particularly two, four, six, eight or ten, more particularly two, heating zones. Alternatively, a cooking zone may be associated with an uneven number, particularly three, five, seven or nine, more particularly three, heating zones.

Preferably, the cooking hob of the present invention is configured such that a cooking zone comprises one or more than one heating zones, which can be driven with the same or different power, frequency or heating level.

In the present invention, it is preferred that in at least one operation mode of the cooking hob according to the present invention is configured such that a cooking zone comprises at least two, preferably two, heating zones, driven by the same power, frequency or heating level. Particularly, such cooking zone comprises or is associated with at least two, preferably two, heating power-transferring elements.

Additionally, or alternatively, the cooking hob of the present invention may be configured such that the number of heating zones associated with one cooking zone may vary and/or may be adjustable dependent on the needs of the cook and/or the size, form or kind of cookware placed on the cooking surface.

Particularly, a cooking hob according to the present invention, preferably an electric hob, such as an induction hob, may comprise at least one heating power energy unit. A heating power energy unit as used herein, preferably provides energy to at least one of, preferable a number of, the heating power transferring elements such that the heating power transferring element is capable of transferring heating power for heating up the foodstuff or cooking liquid. A heating power energy unit of an induction hob, for example, may provide energy in the form of a high frequency alternating current to a heating power-transferring element in the form of an induction coil, which transfers heating power in the form of a magnetic field to a suitable cookware item. For such purpose, a heating power energy unit may comprise at least one associated power circuit mounted and/or arranged on at least one printed circuit board. Preferably, a heating power energy unit is supported and arranged in a housing, preferably a plastic housing, preferably arrangable in and adapted to the lower casing. This allows easy manufacturing and modularization.

Particularly, the housing may comprise supporting elements for supporting the heating power transferring element carrier or heating power transferring element support. Particularly, such supporting elements may comprise elastic means, e.g. springs or silicon elements, for elastically supporting the heating power transferring element carrier or heating power transferring element support, and particularly advantageous in pressing a heating power-transferring element onto the bottom surface of the cooking support plate, which particularly is a glass ceramic plate.

Particularly, the heating power energy unit, and particularly the associated power circuit, may be configured to be connected to at least one, preferably two phases of a mains supply. A cooking hob according to the present invention thereby comprises at least one, preferably two or three heating power energy units, connected to one or two, preferably one phases of the mains supply each.

Preferably, a heating power energy unit may comprise at least - one associated power circuit, particularly in the form of an at least one heating power generator, for generating heating power and supplying heating power-transferring elements with heating power, particularly for providing heating power to the at least one heating zone. Thereby the power circuit particularly may be provided in the form of a half-bridge configuration or a quasi-resonant configuration.

It will be immediately understood that the heating power energy unit may thus comprise one heating power generator for providing heating power to more than one heating zone, each associated with at least one heating power transferring element.

Furthermore, the heating power energy unit may comprise one heating power generator comprising a single or pair of high frequency switching elements.

In particular, the high frequency switching element is provided in the form of a semiconductor-switching element, particularly an IGBT element.

In case the heating power energy unit may comprise one heating power generator comprising a single high frequency switching element, the single switching element preferably forms part of associated power circuit, provided in the form of a or a part of a Quasi Resonant circuit.

In case that the heating power energy unit may comprise one heating generator comprises a pair of high frequency switching elements, said pair of high frequency switching elements preferably forms part of an associated power circuit, provided in the form of a or a part of a half-bridge circuit.

A person skilled in the art will immediately understand that the heat, generated by and/or radiated from particularly the heating power transferring elements, the heating power energy unit and/or the cookware item, particularly the bottom thereof, may have also disadvantageous effects, particularly regarding safety and proper functioning. Particularly, the heating power energy unit, more particularly power circuits comprising switching elements, may generate a significant amount of heat being disadvantage for the safety and proper functioning of the cooking hob. For this reason, the cooking hob comprises at least one cooling means. Particularly, said cooling means is adapted for cooling down the electric and/or electronic elements. Particularly, the heating power energy unit may comprise such cooling means. Such cooling means may comprise at least one of a fan, a cooling channel, a cooling body, preferably from a metal, particularly aluminium, cooling air-guiding means, cooling air deflection means and the like. Particularly, the cooking hob of the present invention may comprise such cooling means for cooling at least one heating power generator or a part thereof, particularly to at least one single or pair of high frequency switching elements. More particularly, such cooling means may comprise a cooling body, preferably arranged in the air path of a cooling fan, and thermally connected to at least one heating power generator or a part thereof, particularly to at least one single or pair of high frequency switching elements. Thereby it is preferred that the cooling means comprises at least one fan for generating an air stream through the cooling channel. Preferably, the cooling channel and/or cooling body extends horizontally through the cooking hob. For example, the cooling channel and/or cooling body extends over a substantial part of the horizontal width of the cooking hob.

The cooking hob according to the present invention preferably further comprises a control unit. Such control unit is preferably operatively connected with the heating power energy unit to control at least one operational parameter of the cooking hob, particularly an operational parameter of the heating power energy unit. Furthermore, the control unit comprises a user interface at least for receiving a command input of a user. This advantageously allows the user to control at least one operational parameter of the cooking hob, particularly an operational parameter of the heating power energy unit. Moreover, the control unit, and particularly a user interface if present, may be operatively connected to other appliances or interfaces, e.g. a suction hood, a voice control device, a server, a remote interface, a cloud-computing source or the like.

Accordingly, the household cooking hob according to the present invention comprises at least one electric and/or electronic element. Particularly, said at least one electric and/or electronic element comprises a heating power energy unit and/or control unit or parts thereof.

Particularly, the at least one electric and/or electronic element of the household cooking hob of the present invention may be part of an at least one heating energy power unit, preferably mounted and/or arranged on a power board and/or a power generating circuit mounted on a printed circuit board (PCB).

Such at least one electric and/or electronic element may be, for example, selected from the group comprising a heating power generator, filter coils, EMC filters, rectifier, switching elements, like IGBTs, relays, or the like.

According to an aspect, the invention refers to a method for controlling the provision of electric power to an induction coil of an induction cooking appliance as defined in claim 1.

The induction cooking appliance comprises a circuitry with an input, at least one switching element for providing pulsed electric power to the induction coil and a capacitor being connected in parallel to the switching element. The method comprises the steps of:
- receiving rectified AC-voltage at the input of the circuitry;
- discharging the capacitor in order to reduce the voltage provided to the switching element;
- after at least partially discharging the capacitor, starting a switching operation of the switching element;
- stopping the switching operation after a switching operation time; and
- iterating the steps of discharging of capacitor, starting of switching operation and stopping of switching operation in subsequent periods of rectified AC-voltage.

Said method is advantageous because due to the discharging step before starting the switching operation, voltage applied to the switching element is reduced. Thereby, switching-on of switching element at high voltage levels can be avoided which reduces power dissipation due to thermal losses within the switching element and acoustic noise generated due to hard switching conditions.

Said discharging is started during a period of time in which the slope of the rectified AC-voltage is falling. Thereby it is possible to charge the capacitor and perform said switching operation during the rising slope of the rectified AC-voltage.

According to an embodiment, the capacitor is discharged to a voltage of 50V or lower. Thereby, the voltage applied to the switching element is reduced and hard-switching condition can be mitigated or avoided which leads to a reduction of power dissipation and a reduction of acoustic noise.

Said discharging is stopped at or close to zero point of rectified AC-voltage. Thereby, advantageously, the rising slope of rectified AC-voltage can be used for performing said switching operation and for charging the capacitor.

The switching operation is started at or close to zero point of rectified AC-voltage. The term "close to zero point" may be defined as an area around zero point which has a duration of 10% or less, specifically 5% or less than the period of rectified AC-voltage. At said point of time, the voltage provided to the switching element is low and detrimental effects caused by hard-switching condition can be avoided.

Said switching operation is stopped before the rectified AC-voltage reaches its minimum value. So in other words, the switching operation is not performed during the whole period of rectified AC-voltage but only during a time period which is shorter than the period of rectified AC-voltage. In yet other words, said switching operation is performed only during a first section of the period of rectified AC-voltage which is smaller than the entire period of rectified AC-voltage. Thereby, during breaks of switching operation, discharging of capacitor before starting said switching operation and, preferably, also re-charging of said capacitor after stopping said switching operation can be performed.

Said switching operation is stopped before the rectified AC-voltage reaches its maximum value. In other words, switching operation is stopped during the rising slope of rectified AC-voltage. Thereby, it is possible to re-charge the capacitor to a maximum voltage value.

Discharging of the capacitor is performed during a second section of the period of rectified AC-voltage which does not overlap with said first section. So, in other words, switching operation is not performed simultaneously with said capacitor discharging caused by a discharging entity. Thereby, said capacitor discharging has no detrimental effects on said switching operation.

According to an embodiment, during a third section of the period of rectified AC-voltage, a charging of the capacitor is performed, wherein said third section of the period of rectified AC-voltage lies between the first section (period of time in which switching operation is performed) and the second section (period of time in which capacitor is discharged) of a certain period of rectified AC-voltage. So in other words, between each switching operation period and discharging period, a re-charging of capacitor is performed.

Said discharging and said switching operation is repeated periodically with the periodicity of the rectified AC-voltage. Thereby it is possible to operate the induction cooking appliance at a reduced minimum power level without exceeding a maximum operating temperature of the switching element and without switching pauses greater than the period of rectified AC-voltage.

According to a further aspect, the invention relates to a system for controlling the provision of electric power to an induction coil of an induction hob as defined in claim 4.

The system comprises a circuitry including an input for receiving rectified AC-voltage, at least one switching element for providing pulsed electric power to the induction coil, a capacitor being connected in parallel to the switching element and a discharging entity being configured to enable a discharging of said capacitor. The system further comprises a control entity, wherein the control entity is configured to perform subsequent control cycles, wherein in said control cycle the control entity is configured to discharge said capacitor based on said discharging entity and, after discharging the capacitor, to start a switching operation of the switching element in order to provide pulsed electric power to the induction coil.

Said system is advantageous because due to discharging the capacitor before starting the switching operation, voltage applied to the switching element is reduced. Thereby, switching-on of switching element at high voltage levels can be avoided which reduces power dissipation due to thermal losses within the switching element and acoustic noise generated due to hard switching conditions.

Said discharging entity is connected in parallel to the capacitor. Said discharging entity may include a resistor which can be activated and deactivated based on a switching element. In an activated state, the resistor is connected in parallel to the capacitor in order to discharge said capacitor. Thereby a time-selective discharging of capacitor is possible.

The control entity is configured to perform the switching operation in a portion of the period of rectified AC-voltage, wherein the portion of the period is smaller than the entire period of rectified AC-voltage. Thereby it is possible to also perform a discharging of capacitor before said switching operation and, preferably, a re-charging of capacitor after said switching operation.

According yet another aspect, the invention relates to an induction cooking appliance comprising a system as described before.

The term "essentially" or "approximately" as used in the invention means deviations from the exact value by +/- 10%, preferably by +/- 5% and/or deviations in the form of changes that are insignificant for the function.

### BRIEF DESCRIPTION OF THE DRAWINGS

The various aspects of the invention, including its particular features and advantages, will be readily understood from the following detailed description and the accompanying drawings, in which:
- Fig. 1: shows an example top view on a cooking appliance comprising multiple heating zones;
- Fig. 2: shows a schematic diagram of a system for controlling the provision of electric power to an induction coil according to an embodiment of the invention; and
- Fig. 3: shows time diagrams of input voltage and capacitor voltage applied to the capacitor.

### DETAILED DESCRIPTION OF PREFERRED EMBODIMENTS

The present invention will now be described more fully with reference to the accompanying drawings, in which example embodiments are shown. The embodiments in the figures may relate to preferred embodiments, while all elements and features described in connection with embodiments may be used, as far as appropriate, in combination with any other embodiment and feature as discussed herein, in particular related to any other embodiment discussed further above. However, this invention should not be construed as limited to the embodiments set forth herein. Throughout the following description similar reference numerals have been used to denote similar elements, parts, items or features, when applicable.

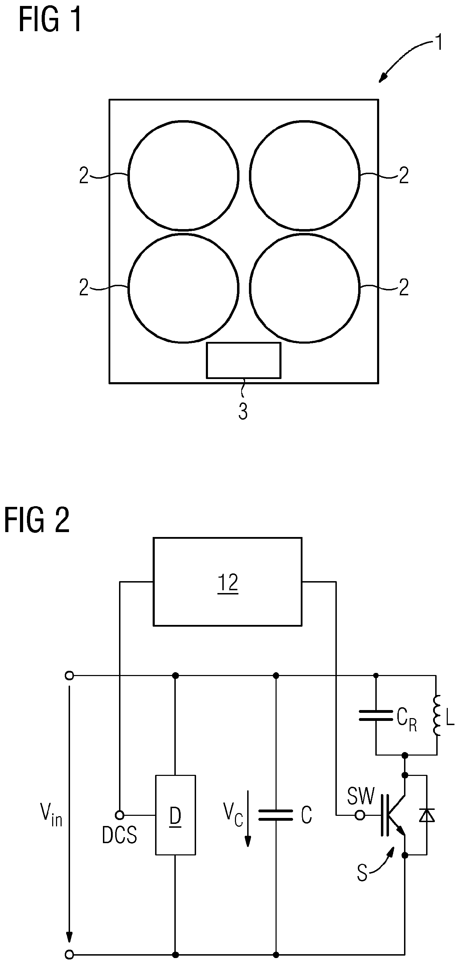

Fig. 1 illustrates a schematic diagram of an induction cooking appliance 1, in the present example an electric induction hob. The induction cooking appliance 1 comprises multiple heating zones 2. Each heating zone 2 may be, for example, associated with one or more heating power transferring elements, specifically, one or more induction coils. The induction cooking appliance 1 may be configured to combine two or more heating zones 2 in order to form larger-sized cooking zones.

In addition, the induction cooking appliance 1 comprises a user interface 3, based on which a user may control the induction cooking appliance 1. For example, based on the user interface 3, the user may control the power level of the heating zones 2. The power level may be chosen between a minimum power level Pₘᵢₙ and a maximum power level Pₘₐₓ.

Fig. 2 shows a schematic diagram of a system for controlling the provision of electric power to an induction coil L, specifically for decreasing switching losses arising at a switching element when operating the heating zone 2 at low power level.

The system comprises a circuitry 10 and a control entity 12 for controlling the operation of the circuitry 10.

The circuitry 10 comprises an input 11 for receiving an input voltage Vᵢₙ. The input voltage Vᵢₙ may be a rectified AC-voltage. For example, the rectified AC-voltage may be derived by rectifying a sinusoidal AC-voltage with a certain frequency. The rectified AC-voltage may comprise the double frequency of the sinusoidal AC-voltage. So, for example, if the sinusoidal AC-voltage has a frequency of 50Hz, the rectified AC-voltage may have a frequency of 100Hz.

The circuitry 10 further comprises a switching element S. The switching element S is electrically coupled with the induction coil L in order to provide electric power to the induction coil L. The induction coil L is further electrically coupled with a capacitor C_{R} for creating a resonance circuit. The capacitor C_{R} may be connected in parallel to the induction coil L. Furthermore, the switching element S may be electrically connected in series to said resonance circuit.

The switching element S is electrically connected with the control entity 12 for receiving a switching signal SW. Based on the switching signal SW, a switching operation of the switching element S can be performed. During said switching operation, pulsed electric power may be provided to the induction coil L which causes an induction heating process. Depending on the electrical dimensioning of the resonance circuit, the switching frequency during switching operation may be in the range of 20kHz to 30kHz, specifically 25kHz.

The circuit 10 further comprises a capacitor C. Said capacitor C is connected in parallel to the switching element S. More in detail, said capacitor C may be connected in parallel to the serial connection of switching element S and resonance circuit. Said capacitor C may be dimensioned such that the voltage V_{c} across the switching element S can be stabilized at least in a certain time span during the period of input voltage Vᵢₙ.

Furthermore, circuit 10 comprises a discharging entity D. Said discharging entity D may be connected in parallel to the capacitor C. Said discharging entity D is configured to time-selectively discharge the capacitor C in order to reduce hard-switching situations and thereby ensuring the operation of the switching element S below a maximum operation temperature.

The discharging entity D may be electrically coupled with said control entity 12 in order to provide a discharging control signal DCS to the discharging entity D. Based on said discharging control signal DCS, a time-selective activation of the discharging entity D can be obtained.

The discharging entity D may, for example, comprise a resistor and a switching element which receives discharging control signal DCS for time-selective activation of said discharging entity D. The switching element may be, for example, a semiconductor switching element, e.g. a transistor etc. According to an embodiment, the switching element S may be used also for activating/deactivating the discharging entity D.

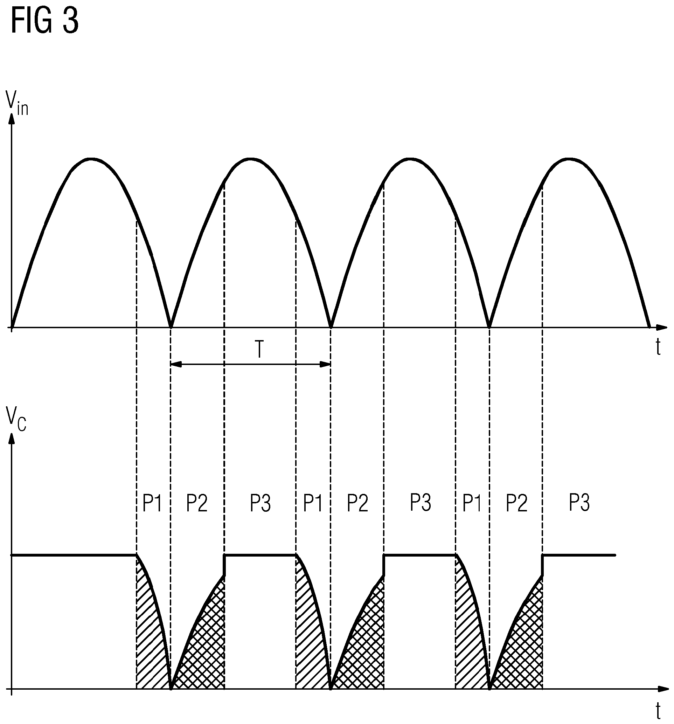

Fig. 3 shows diagrams of the input voltage Vᵢₙ and the capacitor voltage V_{c} vs time t. As mentioned before, the input voltage Vᵢₙ may be a rectified sinusoidal AC-voltage. The input voltage Vᵢₙ may comprise a period time T. For controlling the power provision to the induction coil L, three phases may occur during a certain period T of input voltage Vᵢₙ.

Before starting the first phase P1, the capacitor voltage V_{c} may be at a certain value, specifically at a maximum value. In other words, the capacitor C is fully charged. At the beginning of the first phase P1, discharging entity D is activated in order to discharge capacitor C. Said activation may be obtained by a change of voltage level of discharging control signal DCS. For example, said discharging control signal DCS may be switched from low to high or vice versa. The first phase P1 may start during a descending slope of input voltage Vᵢₙ. During said discharging of capacitor C, no switching operation may be performed by the switching element S.

After at least partially discharging the capacitor C (e.g. to a voltage of 50V or lower), phase P1 stops and phase P2 is started. Stopping of phase P1 may refer to a change of voltage level of discharging control signal DCS such that discharging obtained by discharging entity D is deactivated. It is worth mentioning that, in preferred embodiments, phases P1 and P2 do not overlap. In phase P2, switching operation of switching element S may be started. The start of phase P2 may coincide or may be close to zero point of input voltage Vᵢₙ, wherein "close to zero point" may be defined as an area around zero point which has a time duration of 10% or less, specifically 5% or less than the period T of input voltage Vᵢₙ.

During phase P2, a high-frequency switching signal SW is provided to the switching element S. Thereby, oscillations within the resonance circuit are excited which provides electric power to the induction coil L. Phase P2 may be stopped before input voltage Vᵢₙ get zero, specifically at or before input voltage Vᵢₙ reaches its peak value, i.e. during the rising edge of input voltage Vᵢₙ.

At the end of phase P2, the provision of high-frequency switching signal SW to the switching element S is stopped. Thereby, the capacitor C can be loaded to its maximum voltage value in phase P3 in which discharging entity D is also deactivated. Afterwards, upper-mentioned cycle including phases P1 to P3 can be performed once again.

The cycle including phases P1 to P3 may be repeated periodically with the periodicity of input voltage Vᵢₙ.

Due to activating the switching element only during a certain portion of the period of input voltage Vᵢₙ, it is possible to have, in average, a lower power transfer to the induction coil which reduces to minimum power level. In addition, upper-mentioned discharging of capacitor C before starting switching operation reduces switching losses because due to said discharging of capacitor C, voltage applied to switching element S is reduced.

It should be noted that the description and drawings merely illustrate the principles of the proposed invention. Those skilled in the art will be able to implement various arrangements that, although not explicitly described or shown herein, embody the principles of the invention.

### List of reference numerals

- 1: induction cooking appliance
- 2: heating zone
- 3: user interface

- 10: circuitry
- 11: input
- 12: control entity

- C: capacitor
- C_{R}: resonance capacitor
- D: discharging entity
- DCS: discharging control signal
- L: induction coil
- P1: first phase
- P2: second phase
- P3: third phase
- S: switching element
- SW: switching signal
- V_{c}: capacitor voltage
- Vᵢₙ: input voltage

## Claims

1. Method for controlling the provision of electric power to an induction coil (L) of an induction cooking appliance (1), the induction cooking appliance (1) comprising a circuitry with an input, at least one switching element (S) for providing pulsed electric power to the induction coil (L) and a capacitor (C) being connected in parallel to the switching element (S), the method comprising the steps of:
- receiving rectified AC-voltage (Vᵢₙ) at the input of the circuitry;
- discharging the capacitor (C) in order to reduce the voltage provided to the switching element (S);
- after at least partially discharging the capacitor (C), starting a switching operation of the switching element (S) ;
- stopping the switching operation after a switching operation time; and
- iterating the steps of discharging of capacitor (C), starting of switching operation and stopping of switching operation in subsequent periods of rectified AC-voltage (Vᵢₙ),
- wherein the switching operations are started at or close to zero points of the rectified AC-voltage,
- wherein said discharging is started during the periods of time in which the slope of the rectified AC-voltage is falling and stopped at or close to zero point of the rectified AC-voltage, so that discharging of the capacitor (C) is performed during second sections of the periods of the rectified AC-voltage (Vin) which do not overlap with said first sections,
- wherein during said switching operations, pulsed electric power is provided to the induction coil (L) which causes an induction heating process,
- wherein a said discharging entity (D) is connected in parallel to the capacitor,
**characterized in that**
said discharging and said switching operation are repeated periodically with the periodicity of the rectified AC-voltage, to operate the induction cooking appliance at a reduced minimum power level without exceeding a maximum operating temperature of the switching element, and without switching pauses greater than the period of the rectified AC-voltage,and **in that**
the switching operations are stopped during the rising slopes of the rectified AC- voltage before the rectified AC-voltage reaches its maximum value, so that said switching operations are performed only during first sections of the periods of the rectified AC-voltage (Vin) which are smaller than the entire periods of the rectified AC-voltage (Vin).

2. Method according to claim 1, wherein the capacitor (C) is discharged to a voltage of 50V or lower.

3. Method according to claim 1, wherein during a third section of the period of rectified AC-voltage (Vᵢₙ) , a charging of the capacitor (C) is performed, wherein said third section of the period of rectified AC-voltage (Vᵢₙ) lies between the first section and the second section of a certain period of rectified AC-voltage (Vᵢₙ).

4. System for controlling the provision of electric power to an induction coil (L) of an induction hob (1), the system comprising a circuitry including an input for receiving rectified AC-voltage (Vᵢₙ), at least one switching element (S) for providing pulsed electric power to the induction coil (L), a capacitor (C) being connected in parallel to the switching element (S) and a discharging entity (D) being configured to enable a discharging of said capacitor (C), the system further comprising a control entity (12), wherein the control entity (12) is configured to perform subsequent control cycles, wherein in said control cycle the control entity (12) is configured to discharge said capacitor (C) based on said discharging entity (D) and, after discharging the capacitor (C), to start a switching operation of the switching element (S) in order to provide pulsed electric power to the induction coil (L),
wherein the switching operations are started at or close to zero points of the rectified AC-voltage,
wherein said discharging is started during the periods of time in which the slope of the rectified AC-voltage is falling and stopped at or close to zero point of the rectified AC-voltage, so that discharging of the capacitor (C) is performed during second sections of the periods of the rectified AC-voltage (Vin) which do not overlap with said first sections,
wherein during said switching operations, pulsed electric power is provided to the induction coil (L) which causes an induction heating process,
wherein said discharging entity (D) is connected in parallel to the capacitor, **characterized in that** said discharging and said switching operation are repeated periodically with the periodicity of the rectified AC-voltage, to operate the induction cooking appliance at a reduced minimum power level without exceeding a maximum operating temperature of the switching element, and without switching pauses greater than the period of the rectified AC-voltage,and **in that**
the switching operations are stopped during the rising slopes of the rectified AC- voltage before the rectified AC-voltage reaches its maximum value, so that said switching operations are performed only during first sections of the periods of the rectified AC-voltage (Vin) which are smaller than the entire periods of the rectified AC-voltage (Vin).

5. Induction cooking appliance comprising a system according to claim 4.

## Patentansprüche

1. Verfahren zur Steuerung der Bereitstellung von elektrischem Strom an eine Induktionsspule (L) eines Induktionskochgeräts (1), wobei das Induktionskochgerät (1) eine Schaltungsanordnung mit einem Eingang, mindestens einem Schaltelement (S) zur Bereitstellung von gepulstem elektrischem Strom an die Induktionsspule (L) und einen Kondensator (C), der parallel zu dem Schaltelement (S) geschaltet ist, umfasst, wobei das Verfahren die folgenden Schritte umfasst:
- Empfangen von gleichgerichteter Wechselspannung (Vᵢₙ) an dem Eingang der Schaltungsanordnung;
- Entladen des Kondensators (C), um die an das Schaltelement (S) bereitgestellte Spannung zu reduzieren;
- nach mindestens einem teilweisen Entladen des Kondensators (C), Beginnen einer Schaltoperation des Schaltelements (S);
- Anhalten der Schaltoperation nach einer Schaltoperationszeit; und
- Iterieren der Schritte des Entladens des Kondensators (C), des Beginnens einer Schaltoperation und des Anhaltens einer Schaltoperation in nachfolgenden Perioden von gleichgerichteter Wechselspannung (Vᵢₙ),
- wobei die Schaltoperationen an oder nahe bei Nullpunkten der gleichgerichteten Wechselspannung begonnen werden,
- wobei das Entladen während der Zeitperioden begonnen wird, in denen die Steigung der gleichgerichteten Wechselspannung abfällt und an oder nahe bei einem Nullpunkt der gleichgerichteten Wechselspannung angehalten wird, so dass das Entladen des Kondensators (C) während zweiter Sektionen der Perioden der gleichgerichteten Wechselspannung (Vin) durchgeführt wird, die die ersten Sektionen nicht überlappen,
- wobei während der Schaltoperationen gepulster elektrischer Strom an die Induktionsspule (L) bereitgestellt wird, was einen Induktionsheizprozess verursacht,
- wobei eine Entladeentität (D) parallel zu dem Kondensator geschaltet ist,
**dadurch gekennzeichnet, dass**
das Entladen und die Schaltoperation periodisch mit der Periodizität der gleichgerichteten Wechselspannung wiederholt werden, um das Induktionskochgerät mit einer reduzierten kleinsten Stromhöhe zu betreiben, ohne eine maximale Arbeitstemperatur des Schaltelements zu übersteigen, und ohne Schaltpausen größer als die Periode der gleichgerichteten Wechselspannung, und dass
die Schaltoperationen während der ansteigenden Steigungen der gleichgerichteten Wechselspannung angehalten werden, bevor die gleichgerichtete Wechselspannung ihren Maximalwert erreicht, so dass die Schaltoperationen nur während erster Sektionen der Perioden der gleichgerichteten Wechselspannung (Vin) durchgeführt werden, die kleiner sind als die ganzen Perioden der gleichgerichteten Wechselspannung (Vin).

2. Verfahren nach Anspruch 1, wobei der Kondensator (C) auf eine Spannung von 50 V oder weniger entladen wird.

3. Verfahren nach Anspruch 1, wobei während einer dritten Sektion der Periode von gleichgerichteter Wechselspannung (Vᵢₙ) ein Laden des Kondensators (C) durchgeführt wird, wobei die dritte Sektion der Periode von gleichgerichteter Wechselspannung (Vᵢₙ) zwischen der ersten Sektion und der zweiten Sektion einer gewissen Periode von gleichgerichteter Wechselspannung (Vᵢₙ) liegt.

4. System zur Steuerung der Bereitstellung von elektrischem Strom an eine Induktionsspule (L) eines Induktionsherds (1), wobei das System eine Schaltungsanordnung einschließlich eines Eingangs zum Empfangen gleichgerichteter Wechselspannung (Vᵢₙ), mindestens ein Schaltelement (S) zur Bereitstellung von gepulstem elektrischem Strom an die Induktionsspule (L), einen Kondensator (C), der parallel zu dem Schaltelement (S) geschaltet ist, und eine Entladeentität (D), die ausgelegt ist, um ein Entladen des Kondensators (C) zu ermöglichen, umfasst, wobei das System weiter eine Steuerentität (12) umfasst, wobei die Steuerentität (12) ausgelegt ist zum Durchführen von nachfolgenden Steuerzyklen, wobei in dem Steuerzyklus die Steuerentität (12) ausgelegt ist zum Entladen des Kondensators (C) auf Basis der Entladeentität (D) und nach dem Entladen des Kondensators (C) zum Beginnen einer Schaltoperation des Schaltelements (S), um gepulsten elektrischen Strom an die Induktionsspule (L) bereitzustellen,
wobei die Schaltoperationen an oder nahe bei Nullpunkten der gleichgerichteten Wechselspannung begonnen werden,
wobei das Entladen während der Zeitperioden begonnen wird, in denen die Steigung der gleichgerichteten Wechselspannung fällt, und an oder nahe bei einem Nullpunkt der gleichgerichteten Wechselspannung angehalten wird, so dass das Entladen des Kondensators (C) während zweiter Sektionen der Perioden der gleichgerichteten Wechselspannung (Vᵢₙ)durchgeführt wird, die die ersten Sektionen nicht überlappen,
wobei während der Schaltoperationen gepulster elektrischer Strom an die Induktionsspule (L) bereitgestellt wird, was einen Induktionsheizprozess verursacht,
wobei die Entladeentität (D) parallel zu dem Kondensator geschaltet ist, **dadurch gekennzeichnet, dass** das Entladen und die Schaltoperation periodisch mit der Periodizität der gleichgerichteten Wechselspannung wiederholt werden, um das Induktionskochgerät mit einer reduzierten kleinsten Stromhöhe zu betreiben, ohne eine maximale Arbeitstemperatur des Schaltelements zu übersteigen, und ohne Schaltpausen größer als die Periode der gleichgerichteten Wechselspannung, und dass die Schaltoperationen während der ansteigenden Steigungen der gleichgerichteten Wechselspannung angehalten werden, bevor die gleichgerichtete Wechselspannung ihren Maximalwert erreicht, so dass die Schaltoperationen nur während erster Sektionen der Perioden der gleichgerichteten Wechselspannung (Vᵢₙ)durchgeführt werden, die kleiner sind als die ganzen Perioden der gleichgerichteten Wechselspannung (Vᵢₙ).

5. Induktionskochgerät umfassend ein System nach Anspruch 4.

## Revendications

1. Procédé de commande de l'alimentation électrique d'une bobine d'induction (L) d'un appareil de cuisson à induction (1), l'appareil de cuisson à induction (1) comprenant une circuiterie avec une entrée, au moins un élément de commutation (S) pour fournir de la puissance électrique pulsée à la bobine d'induction (L) et un condensateur (C) connecté en parallèle avec l'élément de commutation (S), le procédé comprenant les étapes de :
- réception d'une tension alternative redressée (Vᵢₙ) au niveau de l'entrée de la circuiterie ;
- décharge du condensateur (C) dans le but de réduire la tension fournie à l'élément de commutation (S) ;
- après avoir au moins partiellement déchargé le condensateur (C), démarrage d'une opération de commutation de l'élément de commutation (S) ;
- arrêt de l'opération de commutation après un temps d'opération de commutation ; et
- itérations des étapes de décharge du condensateur (C), de démarrage de l'opération de commutation et d'arrêt de l'opération de commutation dans des périodes subséquentes de tension alternative redressée (Vᵢₙ),
- les opérations de commutation démarrant à ou près de points zéro de la tension alternative redressée,
- ladite décharge démarrant pendant les périodes de temps dans lesquelles la pente de la tension alternative redressée descend et s'arrêtant à ou près d'un point zéro de la tension alternative redressée, de sorte que la décharge du condensateur (C) est réalisée pendant des deuxièmes parties des périodes de la tension alternative redressée (Vᵢₙ) qui ne chevauchent pas lesdites premières parties,
- pendant lesdites opérations de commutation, de la puissance électrique pulsée étant fournie à la bobine d'induction (L) entraînant un processus de chauffe par induction,
- une entité de décharge (D) étant connectée en parallèle avec le condensateur,
**caractérisé en ce que**
ladite décharge et ladite opération de commutation sont répétées périodiquement avec la périodicité de la tension alternative redressée, pour faire fonctionner l'appareil de cuisson à induction à un niveau de puissance minimum réduit sans excéder une température de fonctionnement maximum de l'élément de commutation, et sans interruptions de commutation plus longues que la période de la tension alternative redressée, et **en ce que** les opérations de commutation sont arrêtées pendant les pentes montantes de la tension alternative redressée avant que la tension alternative redressée n'atteigne sa valeur maximum, de sorte que lesdites opérations de commutation sont réalisées uniquement pendant des premières parties des périodes de la tension alternative redressée (Vᵢₙ), qui sont plus courtes que les périodes entières de la tension alternative redressée (Vᵢₙ).

2. Procédé selon la revendication 1, le condensateur (C) étant déchargé à une tension de 50 V ou moins.

3. Procédé selon la revendication 1, pendant une troisième partie de la période de tension alternative redressée (Vᵢₙ), une charge du condensateur (C) étant réalisée, ladite troisième partie de la période de tension alternative redressée (Vᵢₙ) se trouvant entre la première partie et la deuxième partie d'une certaine période de tension alternative redressée (Vᵢₙ).

4. Système de commande de l'alimentation électrique d'une bobine d'induction (L) d'une plaque à induction (1), le système comprenant une circuiterie comportant une entrée pour recevoir une tension alternative redressée (Vᵢₙ), au moins un élément de commutation (S) pour fournir de la puissance électrique pulsée à la bobine d'induction (L), un condensateur (C) connecté en parallèle avec l'élément de commutation (S) et une entité de décharge (D) configurée pour permettre une décharge dudit condensateur (C), le système comprenant en outre une entité de commande (12), l'entité de commande (12) étant configurée pour réaliser des cycles de commande subséquents, dans ledit cycle de commande l'entité de commande (12) étant configurée pour décharger ledit condensateur (C) sur la base de ladite entité de décharge (D) et, après la décharge du condensateur (C), pour démarrer une opération de commutation de l'élément de commutation (S) dans le but de fournir de la puissance électrique pulsée à la bobine d'induction (L),
les opérations de commutation démarrant à ou près de points zéro de la tension alternative redressée,
ladite décharge commençant pendant les périodes de temps dans lesquelles la pente de la tension alternative redressée descend et s'arrêtant à ou près d'un point zéro de la tension alternative redressée, de sorte que la décharge du condensateur (C) est réalisée pendant des deuxièmes parties des périodes de la tension alternative redressée (Vᵢₙ) qui ne chevauchent pas lesdites premières parties,
pendant lesdites opérations de commutation, de la puissance électrique pulsée étant fournie à la bobine d'induction (L) entraînant un processus de chauffe par induction,
ladite entité de décharge (D) étant connectée en parallèle avec le condensateur, **caractérisé en ce que** ladite décharge et ladite opération de commutation sont répétées périodiquement avec la périodicité de la tension alternative redressée, pour faire fonctionner l'appareil de cuisson à induction à un niveau de puissance minimum réduit sans excéder une température de fonctionnement maximum de l'élément de commutation, et sans interruptions de commutation plus longues que la période de la tension alternative redressée, et **en ce que** les opérations de commutation sont arrêtées pendant les pentes montantes de la tension alternative redressée avant que la tension alternative redressée n'atteigne sa valeur maximum, de sorte que lesdites opérations de commutation sont réalisées uniquement pendant des premières parties des périodes de la tension alternative redressée (Vᵢₙ), qui sont plus courtes que les périodes entières de la tension alternative redressée (Vᵢₙ).

5. Appareil de cuisson à induction comprenant un système selon la revendication 4.
